(19)

Europäisches
Patentamt
European
Patent Office
Office européen
des brevets

(11)     **EP 2 578 085 B1**

(12)                      **EUROPEAN PATENT SPECIFICATION**

(45) Date of publication and mention
of the grant of the patent:
**30.08.2017   Bulletin 2017/35**

(51) Int Cl.:
*A23C 19/05* *(2006.01)*     *A23C 19/076* *(2006.01)*

(21) Application number: **11185463.4**

(22) Date of filing: **17.10.2011**

(54) **LOW-FAT, BRINE-MATURED, SOFT WHITE CHEESE ENRICHED WITH CHOLESTEROL LOWERING AGENT AND METHOD FOR PREPARING SAME**

IN SALZLAKE GEREIFTER WEISSER WEICHKÄSE MIT GERINGEM FETTGEHALT, ANGEREICHERT MIT CHOLESTERINSENKENDEM MITTEL UND HERSTELLUNGSVERFAHREN DAFÜR

FROMAGE BLANC DOUX, ALLÉGÉ EN GRAISSE, MATURÉ AU SAUMURE, ENRICHI EN AGENT DE RÉDUCTION DE CHOLESTÉROL ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **04.10.2011   GR 20110100573**

(43) Date of publication of application:
**10.04.2013   Bulletin 2013/15**

(73) Proprietor: **Minerva S.A. Edible Oils & Foods Enterprises**
**14452 Metamorphosi, Attika (GR)**

(72) Inventors:
• **Poulos, Spyridon**
**17121 Nea Smirni, Athens (GR)**
• **Papadimitriou, Ioannis**
**11142 Labrini, Athens (GR)**

(74) Representative: **Betten & Resch**
**Patent- und Rechtsanwälte PartGmbB**
**Maximiliansplatz 14**
**80333 München (DE)**

(56) References cited:
**WO-A1-00/33669          WO-A1-2004/056188
WO-A1-2010/023364     US-A- 6 162 483
US-A1- 2009 068 310**

• **BAE ET AL.: "Properties of cholesterol-reduced Feta cheese made by cross-linked beta-cyclodextrin", MILCHWISSENSCHAFT, vol. 64, no. 2, 2009, pages 165-168, XP008152278,**
• **GARCIA-AMEZQUITA L E ET AL: "Effect of nonthermal technologies on the native size distribution of fat globules in bovine cheese-making milk", INNOVATIVE FOOD SCIENCE AND EMERGING TECHNOLOGIES, ELSEVIER, AMSTERDAM, NL, vol. 10, no. 4, 1 October 2009 (2009-10-01), pages 491-494, XP026501972, ISSN: 1466-8564, DOI: 10.1016/J.IFSET.2009.03.002 [retrieved on 2009-03-14]**

**Description**

The present invention relates to a method for preparing a brine-matured, soft white cheese enriched with a cholesterol lowering agent, comprising mixing partially skimmed milk and skimmed milk supplemented with a cholesterol lowering agent and preparing a brine-matured, soft white cheese from the resulting mixture. The cholesterol lowering agent is selected from the group consisting of free plant sterols, plant sterol esters, free plant stanols, plant stanol esters, and mixtures thereof. Furthermore, the present invention relates to a brine-matured, soft white cheese produced by said method, which is suitable for use in the prevention and treatment of diseases associated with hypercholesterolemia.

The food industry is constantly challenged to meet consumer demands for new food products that are safe, convenient, affordable, pleasurable and healthy. Today, more than ever, consumers are aware of the relationship between nutrition and health and increasingly demand food products with science-based, health-improving nutritional supplements. Therefore, food manufacturers put great efforts in developing healthier foods containing functional ingredients associated with health benefits that have preferably the same sensory attributes as the corresponding foods without the functional ingredients. However, this is often a challenging task due to the fact that the functional ingredients may, for example, have an unpleasant taste or odor, an insufficient solubility, a low stability, a poor processability, and a negative impact on the appearance or texture of foods.

Food products that contain components, which have a blood cholesterol lowering effect, have been of particular interest for many investigators since a high blood cholesterol level has been recognized as a major risk factor for diseases like coronary heart disease, stroke and atherosclerosis. One particular group of blood cholesterol lowering agents, which has attracted much attention, has been plant sterols (phytosterols) and plant stanols (phytostanols). Major sources of these compounds are seeds, vegetable fats and oils and nuts. The average intake from a normal diet is around 150 to 400 mg per day.

Plant sterols and stanols have been found to inhibit the absorption of both biliary and dietary cholesterol from the intestinal lumen and decrease the blood level of LDL-cholesterol. For this reason, there were various attempts in the food industry to incorporate plant sterols and stanols into food products as functional ingredients to produce a food product with health benefits. Plant stanols and sterols were also reported to be useful in the dietary treatment of hypercholesterolemia. The preparation of stanol fatty acid esters and their cholesterol lowering effects are, for example, described in US patents 5,502,045 and 6,174,560.

Scientific studies have shown that the daily dietary intake of plant sterols or stanols should be from 1.5 to 3.0 g to lower the serum LDL cholesterol levels in humans by about 10% to 14%, thereby decreasing the risk of coronary heart disease (CHD). This health relationship between the amount of plant sterols and/or stanols and coronary heart disease complies with EU food regulations for a food product to make a phytosterol/CHD or phytostanol/CHD health claim.

In particular, Commission Decisions 2004/333/EC and 2004/336/EC, both of 31 March 2004, recognize the health effects of plant stanol esters and plant sterol esters when added to cheese-type products containing no more than 12% total fats. Also, Commission Regulation (EU) No 376/2010 of 3 May 2010 amending Regulation (EC) No 983/2009 on the authorization and refusal of authorization of certain health claims made on food sets specific ranges for the percentage of plant sterol esters and plant stanol esters to be added to dairy products in order to achieve a specific reduction of blood LDL cholesterol level.

Feta cheese and other similar white cheeses matured in brine are among the most commonly sought or popular cheeses in the world, in particular in Greece. However, these cheeses have recently been discredited due to their high content in milk saturated fats and their rather high cholesterol content. Usually, these cheeses are so high in dairy origin fats and cholesterol that they have been considered "less preferable" for consumers at risk from high cholesterol levels. In fact, feta cheese and other feta-like white cheeses have been partially or totally removed from the daily diet of consumers with mild or high hypercholesterolemia. These consumers at risk from high cholesterol levels desire alternative cheese products with health benefits that are as tasteful as the conventional cheeses available on the market. Also, there is a strong demand of the average (healthy) consumers for cheeses, especially brine-matured, soft white cheeses, offering added value health benefits due to the increased awareness of the average consumer of the relationship between food and health.

The production of a feta-type cheese supplemented with plant sterol or plant stanol esters is disclosed in WO 2010/023364 A1. This patent document describes that the taste of a milk product enriched with plant sterol/stanol esters can be improved by means of specific biologically active tripeptides. These tripeptides are reported to prevent oxidation of the plant sterol/stanol esters, thereby eliminating undesired off-tastes. The preparation of the feta-type cheese involves the step of adding plant sterol/stanol esters and tripeptide concentrate to milk and homogenizing the resulting mixture.

In addition, US 2006/0177484 A1 describes a method for preparing a cheese alternative product, in which vegetable oil containing added plant sterol esters is incorporated into dairy origin skimmed milk by injection without homogenization to obtain filled milk, followed by forming the cheese alternative product from the filled milk. Further, WO 2004/056188 A1 describes a process for the addition of plant sterols and/or stanols by the method of high pressure injection to cheddar or gouda cheeses. Moreover, WO 00/33669 A1 discloses the preparation of a cholesterol reducing edible product, wherein plant sterols or plant stanols are dissolved or mixed in a melt of food emulsifiers and the resulting solution or mixture is admixed to a protein containing product such as milk. The mixture is then homogenized to form plant sterol or stanol containing liposomes which are then added to food stuffs such as milk that can be used in cheese manufacturing.

The currently known brine-matured, soft white cheeses supplemented with plant sterol or stanols are still associated with drawbacks compared to the corresponding standard cheese product lacking the supplemented plant sterols or stanols such as, for example, traditional Greek feta cheese. For instance, they often have an inferior texture in relation to mouthfeel sensations and cheese cutting sensory sensations. Others are unsatisfactory with respect to one or more of key sensory attributes like color, appearance, odor, taste, flavor and aftertaste. Moreover, the used cheese production processes may involve the addition of extra ingredients, such as emulsifiers and antioxidants, which are required for compensating undesirable effects associated with the supplemented plant sterol or stanol esters.

Thus, the present invention aims at the provision of a simple and efficient method for preparing a brine-matured, soft white cheese that provides health benefits by lowering blood cholesterol levels while having excellent sensory attributes.

It was surprisingly found that this objective is solved by the method as defined in the appended claims. In particular, the method of the present invention enables the efficient incorporation of the cholesterol lowering agent, i.e. plant stanol esters and/or plant sterol esters, into fat reduced milk in a simple two-step fashion. The low-fat, brine-matured, soft white cheese prepared by the specific two-step method of the present invention unexpectedly exhibits an excellent texture and excellent sensory attributes comparable to those of corresponding conventional full-fat cheeses lacking the added cholesterol lowering agent.

In particular, the inventors of the present invention found in laboratory and industrial trials that the injection of the hot liquefied stanol or sterol esters into partially skimmed milk results in a low-fat, brine-matured, soft white cheese from the feta-type having a texture and other sensory characteristics that are not as stable and inferior, respectively, compared to a traditional Feta cheese. Without being bound by theory, it is believed that the extremely high shear rates and the high pressures prevailing during milk/stanol and/or sterol esters mixing during homogenization have a strong negative impact on, or even destroy, both the milk fat globules and proteins primary structure. As a result, the produced cheese was found to have a very loose and abnormal structure, which is distinctly different from that of feta cheese. However, after extensive research and investigation, the present inventors discovered that the specific two-step method as described herein allows the preparation of a low-fat, brine-matured, soft white cheese, in particular of feta-style, which not only exerts a cholesterol lowering effect but also exhibits mouthfeel attributes comparable to those of regular Feta cheese and, as a result, accomplished the present invention.

According to a first aspect of the present invention, there is provided a method for preparing a brine-matured, soft white cheese enriched with a cholesterol lowering agent, comprising the following steps in sequential order:

(a) preparing a homogeneous mixture of skimmed milk and a cholesterol lowering agent by carrying out the following sub-steps:

(i) providing skimmed milk,
(ii) providing a cholesterol lowering agent, the cholesterol lowering agent being selected from the group consisting of free plant sterols, plant sterol esters, free plant stanols, plant stanol esters, and mixtures thereof,
(iii) mixing the skimmed milk and the cholesterol lowering agent, and
(iv) homogenizing the mixture of skimmed milk and the cholesterol lowering agent to give a homogeneous mixture of skimmed milk and cholesterol lowering agent;

(b) providing partially skimmed milk, the partially skimmed milk not being subjected to homogenization;

(c) mixing the homogeneous mixture of skimmed milk and cholesterol lowering agent provided in step (a) and the partially skimmed milk of step (b) to obtain a soft white cheese making mixture; and

(d) preparing a brine-matured, soft white cheese enriched with a cholesterol lowering agent from the soft white cheese making mixture provided in step (c).

The process that leads to the soft white cheese making mixture (steps (a) to (c)) basically involves (i) the incorporation of the cholesterol lowering agent into skimmed milk made from only a given portion of the total raw milk used in the cheese making and (ii) the admixing to partially skimmed milk made from the remaining portion of the total raw milk used. Therefore, the method of the present invention is sometimes referred to herein as a "two-step method" or "two-step process".

This specific two-step process enables the manufacturing of a brine-matured, soft white cheese enriched with a cholesterol lowering agent which has a superior texture and superior mouthfeel attributes very close to the traditional full-fat feta cheese, and can be easily sliced. These superior properties are attributed to the fact that only a part of the required whole amount of raw milk is used to prepare a homogenized mixture with the cholesterol lowering agent, and the rest of the raw milk is, after partial cream separation but not subjected to homogenization, added to the homogenized mixture in form of a non-homogenized skimmed milk. This two-step approach allows, on the one hand, achieving a sufficient degree of homogenization in order to fully incorporate and emulsify the plant sterol esters and/or plant stanol esters without the need for applying extended high pressure homogenization that may result in poor curd texture or even an unusable texture. On the other hand, it is believed to prevent structural changes in the majority of proteins and fat globules of the milk, the unaffected milk fat globules and milk proteins (caseins) responding much better to the cheese making process.

As used herein, the term "brine-matured, soft white cheese" is intended to refer to a cheese which is white in appearance, recognized or categorized as a soft cheese, and matured in brine. Examples include Sirene, Beyaz peynir, Telemea and Feta cheeses. In accordance with the present invention, the soft white cheese matured in brine is preferably a feta-type (feta-style or feta-like) cheese. A "feta-type", "feta-style" or "feta-like" cheese within the meaning of the present invention is defined and distinguished from other soft white cheeses, such as Brie, Camembert, Roquefort, Blue cheese, Gorgonzola, Stilton and the like, by the fact that the cheese curd is typically not pressed or cooked, the whey is drained naturally (i.e., without applying pressure and the like), the cheese is matured in brine, and usually have a white solid, but crumbly texture with some fissures. Preferred feta-type soft white cheese matured in brine include Greek feta cheese and other feta cheeses, with a traditional Greek feta cheese being particularly preferred.

In this connection, it should also be noted that the brine-matured, soft white cheese prepared in accordance with the present invention is, as a result of its method of preparation, a "low-fat" cheese. Therefore, the soft white cheese of the present invention is sometimes referred to as a "low-fat, brine-matured, soft white cheese" which is preferably feta-like.

The term "health benefits", as used herein with reference to food products in general and the brine-matured, soft white cheese of the present invention in particular, means a benefit which prevents or reduces the risk of a disease or health condition, including the management of a disease or health condition or the improvement of health. Health benefits generally characterize a relationship between a specific food component or a specific food an a health-related condition, including the prevention and treatment of a disease.

In step (a) of the method of the present invention, there is prepared a homogeneous mixture of skimmed milk and a cholesterol lowering agent. The term "skimmed milk", as used herein, refers to milk prepared from whole milk by removing a majority or essentially all of the cream (also called milkfat). Preferably, the skimmed milk is between 0.1 wt.% and 0.3 wt.% fat and most preferably between 0 wt.% and 0.2 wt.% fat. Any conventional means for removing cream from whole milk can be used to carry out step (a).

Typically, the skimmed milk provided in step (a)(i) is prepared from 10 wt.% to 40 wt.%, preferably from 15 wt.% to 25 wt.%, of the total amount of raw milk needed in the preparation of the brine-matured, soft white cheese, while the partially skimmed milk provided in step (b) is prepared from the remaining 60 wt.% to 90 wt.%, preferably from the remaining 75 wt.% to 85 wt.%, of the total amount of raw milk needed in the preparation of the brine-matured, soft white cheese.

The raw milk used to provide the skimmed milk and the partially skimmed milk is preferably sheep raw milk, goat raw milk or a mixture thereof. Preferably, the weight ratio of sheep raw milk to goat raw milk in the mixture is in the range of 30:70 to 99.99:0.01, more preferably in the range of 70:30 to 99:1, and most preferably in the range of 80:20 to 95:5. It is also preferred that only sheep raw milk is used in the cheese manufacturing method.

The cholesterol lowering agent used in the present invention is a free plant sterol, a plant sterol ester, a free plant stanol, a plant stanol ester or any mixture thereof. Esters of sterols and/or stanols with fatty acids are preferably used. These compounds have been scientifically proven to lower the blood cholesterol level. Suitable examples of plant sterols and/or stanols and/or esters thereof include esters of sitosterol, in particular β-sitosterol, sitostanol, campesterol, campestanol, stigmasterol, brassicasterol and other known sterols/stanols and/or esters thereof.

The cholesterol lowering agent is used in an amount such that a recommended daily dose of 75 g of the brine-matured, soft white cheese contains the cholesterol lowering agent in an amount sufficient to have a blood cholesterol lowering effect. Preferably, the cholesterol lowering agent is used in an amount such that the brine-matured, soft white cheese contains the cholesterol lowering agent in an amount of from 2 wt.% to 4 wt.%. This concentration corresponds to 1.5 to 3.0 g per recommended daily dose of 75 g cheese, which amount is sufficient to obtain a blood cholesterol lowering effect in accordance with relevant EU food regulations, especially Regulation (EC) No 608/2004 of 31 March 2004 and Commission Regulation (EU) No 376/2010 of 3 May 2010 amending Regulation (EC) No 983/2009 of 21 October 2009 and issued in line to the Regulation (EC) No 1924/2006 (the "EU health claim Regulation") of 20 December 2006 on nutrition and health claims made on foods.

The cholesterol lowering agent provided in step (a)(ii) or mixed with the skimmed milk in step (a)(iii) is present in a form that typically does not include other components such as vegetable oils and/or emulsifiers. As a rule, vegetable oils are also not used in any other step of the method of the present invention. The same applies for emulsifiers. This is to say that the method of the present invention can avoid the use of an emulsifier for dispersing and incorporating the plant stanol esters and/or plant sterol esters in milk and the cheese making mixture.

In step (a)(iii), the cholesterol lowering agent is mixed with the skimmed milk, preferably by dosing into a stream of the skimmed milk. In particular, the mixing step (a)(iii) is effected by dosing the cholesterol lowering agent into a stream of the skimmed milk at a ratio that results in a brine-matured, soft white cheese containing the cholesterol lowering agent in an amount of 2 wt.% to 4 wt.%. According to a preferred embodiment, the cholesterol lowering agent is heated to a temperature of from 63°C to 73 °C to form a liquid phase prior to mixing with the skimmed milk in step (a)(iii).

Next, in step (a)(iv), the mixture of skimmed milk and cholesterol lowering agent is homogenized to obtain a soft white cheese making mixture. A conventional homogenizer used for the homogenization of milk can be used for this purpose. According to a preferred embodiment, the homogenization of step (a)(iv) includes a first homogenization stage at a pressure of 80 bar to 220 bar and a subsequent second homogenization stage at a pressure of 15 bar to 40 bar. Preferably, the homogenized mixture is subjected to pasteurization in a sub-step (a)(v).

In step (b) of the method of the present invention, there is provided partially skimmed milk. The term "partially skimmed milk", as used herein, means milk prepared from whole milk by partially removing the cream. Preferably, the partially skimmed milk is from 0.5 wt.% to 3.0 wt.% fat and more preferably from 1.5 wt.% to 2.5 wt.% fat. Any conventional means for removing cream from whole milk can be used to carry out step (b).

The provision of the partially skimmed milk of step (b) does not include a homogenizing step using, for example, a conventional milk homogenizer. This means that a non-homogenized, partially skimmed milk is used in the mixing of step (c) of the method of the present invention. Also, the method does not include a homogenization step or stage subsequent to step (c). However, step (b) preferably includes the step of subjecting the partially skimmed milk to pasteurization.

In step (c) of the method of the present invention, the homogeneous mixture of skimmed milk and cholesterol lowering agent provided in step (a) and the partially skimmed milk of step (b) are mixed to obtain a soft white cheese making mixture.

According to a preferred embodiment of the method of the present invention, the homogeneous mixture of skimmed milk and cholesterol lowering agent and/or the partially skimmed milk, preferably both, are cooled to a temperature of from 2 °C to 6 °C at the end of step (a) and/or step (b) and prior to mixing step (c).

In step (d) of the method of the present invention, the soft white cheese making mixture of step (c) is used to prepare the brine-matured, soft white cheese. The cheese production in this step can be carried out in accordance with cheese making technologies known in the art for brine-matured, soft white cheeses like Feta. In brief, a starter culture is added to the cheese making mixture to impart desirable and predictable characteristics to the final cheese product, followed by coagulating the milk proteins. Mesophilic starter bacteria of, for example, type "O" or "L" (mainly *Lactococcus spp.*), and thermophilic starter bacteria (mainly *Streptococcus* and *Lactobacillus ssp.*) can be used. Milk coagulation can be conveniently effected using rennet, an enzyme complex capable of hydrolyzing milk proteins, causing the milk to separate into solids (curds) and liquid (whey). The whey is drained off from the coagulum, preferably without applying pressure, and the remaining curd is matured in brine. The final brine-matured, soft white cheese can then be cooled for any desired period of time, for example for 2 to 3 months, and finally be packaged for shipping.

According to a second aspect of the invention, there is provided a brine-matured, soft white cheese obtainable by the method described herein, wherein the total fat content of the brine-matured, soft white cheese is no more than 12 wt.%. This cheese offers health benefits in that it exerts a blood cholesterol lowering effect due to the supplemented cholesterol lowering agent. As mentioned above, the brine-matured, soft white cheese of the present invention is a low-fat cheese as a result of its manufacturing process. The total fat content of the brine-matured, soft white cheese is no more than 12 wt.%, as specified in the above-mentioned Commission Decisions 2004/333/EC and 2004/336/EC, preferably less than 11 wt.%, and more preferably less than 10, 9 or 8 wt.%.

The brine-matured, soft white cheese of the present invention does not only exhibit health benefits but also has desirable properties such as a superior texture stability, an excellent sliceability and very good sensory attributes. These properties are comparable to those of a corresponding full-fat, brine-matured, soft white cheese without added cholesterol lowering agents. These beneficial properties are imparted to the cheese by the peculiar two-step process used for incorporating the cholesterol lowering agent into milk as described above, i.e. steps (a) to (c) of the method of the present invention

The brine-matured, soft white cheese of the present invention is suited for use in the prevention or treatment of diseases associated with hypercholesterolemia. Such diseases include, without limitation, coronary heart disease, atherosclerosis, stroke, and myocardial infarction.

The present invention will now be further described with respect to a preferred embodiment and by reference to the respective FIGS. 1 to 2, in which:

FIG. 1 is a flow chart showing the preparation of a homogeneous mixture of skimmed milk and cholesterol lowering agent according to step (a) of the method according to the present invention; and

FIG. 2 is a flow chart showing the preparation of partially skimmed milk according to step (b) of the method according to the present invention.

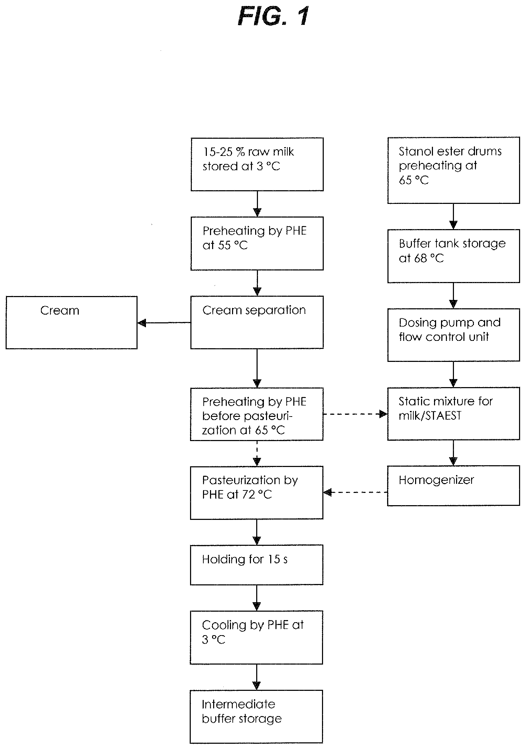

Referring to FIG. 1, an amount of typically about 10 wt.% to 40 wt.%, for example 15 wt.% to 25 wt.%, of the total raw milk to be used is fed to a pasteurization unit like a plate heat exchanger (PHE). The raw milk is heated at the pasteurizer's first heating section to a temperature of preferably 50 °C to 60 °C, for example 55°C. Thereafter, a cream centrifugal separator is used for essentially completely separating the fat content of the milk, and the produced cream is stored separately for further processing (e.g. for use in butter making). The skimmed milk produced has a residual fat content of < 0.5 % and is fed to the second heating section of the pasteurizer raising the temperature to typically about 60 °C to 70 °C, for example 65°C.

Previously or simultaneously, the plant sterol or stanol esters, which may be stored in solid form in containers (drums), are preheated (e.g. in a chamber with hot air circulation) to a temperature of typically about 60°C to 70 °C, for example 65 °C, in order to effect a phase change from solid to liquid. The liquefied esters may then be transferred in a jacketed (e.g. hot water heated) and agitated tank, and are kept at a temperature of typically 63°C to 73 °C, for example 68°C. The hot liquefied plant sterol or stanol esters are subsequently fed to a dosing pump, such as a high precision dosing mono-pump which is automatically controlled as a function of the flow velocity of the skimmed milk stream. The plant sterol or stanol esters can be accurately dosed into the stream of the skimmed milk by means of injection at a certain ratio in order to attain the desired amount in the final cheese product. An on line static mixer ensures the efficient mixing of the esters and the skimmed milk.

Next, the plant sterol/stanol ester containing skimmed milk is fed into a two stage milk homogenizer. In the first stage of the homogenizer the esters are completely dispersed and fully incorporated into the skimmed milk at a high pressure of typically about 80 bar to 220 bar, preferably 120 bar to 200 bar, for example 160 bar. In the second stage of the homogenizer the mixture is processed at a lower pressure of 15 bar to 40 bar, preferably 20 bar to 30 bar, for example 25 bar, to avoid any oil cluster reforming effects. Following this, the formed mixture may be finally heated in the pasteurizing section of the pasteurizer to a temperature of typically 70 °C to 74 °C, for example 72°C, and kept at this temperature for a predetermined time of, for example, 15 s. After that, the mixture is introduced into the cooling section of the pasteurizer and is cooled to a final temperature of typically 2 °C to 6 °C, for example 3 °C. The cooled mixture may then be stored in an intermediate buffer tank under continuous cooling and agitation.

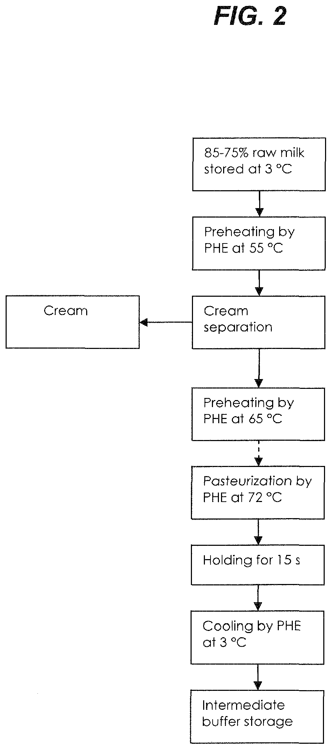

Referring now to FIG. 2, the remaining 60 wt.% to 90 wt.%, preferably 75 wt.% to 85 wt.%, of the total raw milk is preheated at the pasteurizer (PHE) to a temperature of typically 50 °C to 60 °C, for example 55 °C, prior to entering the milk centrifugal separator, in which the fat content is partially separated and the produced cream is stored separately for further processing (e.g. for use in butter making). The partially skimmed milk is then usually pasteurized at a temperature of typically about 70 °C to 74 °C, for example 72 °C, in the pasteurization section (PHE) and kept at this temperature for a predetermined period of, for example, 15 s. The pasteurized partially skimmed milk is then cooled in the pasteurizer's cooling section to a temperature of typically 2 °C to 6 °C, for example 3 °C. The partially skimmed milk may then be fed into the intermediate buffer tank and mixed with the mixture of skimmed milk and the plant sterol or stanol esters already present in the intermediate buffer tank to give the complete cheese making mixture.

The cheese making mixture is used to prepare a brine-matured, soft white cheese by feeding the stored mixture again to the pasteurizer section and heating to a temperature of 33°C to 37 °C, preferably 34 °C to 36 °C, for example 35°C. The heated mixture is then fed into cheese making vats, each one having a capacity of, for example, 1000 liters. Usually, each vat already contains typically 4.0 kg to 5.0 kg of a thermophilic bulk starter culture for pre-acidifying the cheese making mixture during the vat filling (about 10 min).

The thermophilic bulk starting culture can be, and preferably is, prepared before the beginning of the cheese making process. According to a typical procedure for culture preparation, skimmed milk powder is added to a vat having a double jacket filled with hot water at about 55 °C at a ratio of about 1:15 (substrate:water). The mixture is agitated until the skimmed milk powder has been completely dissolved. After that, the mixture is heated with hot water circulation in the jacket of the vat to about 90°C for approximately 30 min for sterilization of the substrate. The mixture is then cooled to a temperature of about 38 °C to 39 °C and a predetermined quantity of the dry frozen dairy culture is added under agitation. Next, the mixture is incubated at a temperature of about 38°C to 39 °C for approximately 4 to 5 h until the pH has reached a value of about 4.5 to 4.6. After that, the mixture is cooled to about 0 °C by means of cool water circulation in the jacket of the vat, and the cooled mixture is stored under agitation until the time of its use.

Following the filling of each vat, typically 100 ml to 140 ml rennet, for example 120 ml, and typically 100 ml to 130 ml calcium chloride, for example 115 ml, are added while the cheese making mixture is agitated for a duration of typically 2 min to 3 min. The mixture is then allowed to stand for 45 min to 55 min. During this time, coagulation takes place and the coagulum develops acidity and forms a jelly structure.

The coagulum is then cut into cubic pieces and allowed to stand for 10 min to form curd and whey serum. The vat contents are emptied into perforated rectangular molds. The whey serum is drained off through the perforations. The whey serum draining process may mainly take place while the molds are moving on a transporting chain prior to stacking the molds in columns and forming pallets. At this point, only a very small amount (about 0.01 % to 0.05 % (w/w)) of the used sterols/stanols, for example plant sterol esters, are lost from the curd and drained off with the whey. The cheese curd remains in the stacked molds, typically overnight, in a chamber with controlled temperature of typically 17 °C to 19 °C, while the formed pallets are periodically turned upside down for the whey draining process to continue and the curd to obtain regular block shape.

The next morning (the second day) the formed cheese blocks are removed from the molds and dry salt (i.e. sodium chloride) is added to their surfaces. The salted cheese blocks are placed into basins and may be subsequently stacked in pallets and transferred to a separate room with a constant temperature of typically 20°C, where they stay for a period of typically one day in order to complete the whey draining process. The cheese blocks now (on the third day) have a weight of typically about 1.6 to 1.8 kg and are placed into containers, each of which typically receive 8 cheese blocks. The containers are then filled with brine of 6 to 7 Be and sealed.

The ripening phase of the cheese is effected upon storage of the containers in rooms with a controlled temperature of typically 18°C. The cheese ripening is completed when the pH drops below 4.5 to 4.6 and the organoleptic properties (structure, taste, aroma) have reached their characteristic levels. The cheese ripening usually takes approximately 8 to 12 days. Thereafter, the containers with the cheese may be transferred to cooling rooms at about 2 °C, and the cheese may be cut into wedges and packaged.

The formed low-fat, brine-matured, soft white cheese of the feta-type enriched with plant sterols or plant stanol esters produced by the particular two-step method of the present invention has a superior texture stability and sliceability and exhibits excellent sensory attributes, very similar to full-fat Greek traditional feta cheese.

The following, non-limiting examples will further illustrate and explain the present invention.

EXAMPLE 1

Preparation of a feta-type, low-fat, soft white cheese

Sheep raw milk and goat raw milk were mixed in the following ratio and the resulting mixture contained the following protein, fat and water contents.

Sheep raw milk: 2240 kg (80 vol.%)
Goat raw milk: 560 kg (20 vol.%)
Total protein: 5.37 wt.%
Total fat: 6.24 wt.%
Free added water content: 4.6 wt.%

(refers to water added to the supplied milk or water incorporated due to flash cleaning process and the like).

The raw milk mixture was stored at less than 6 °C. It was then preheated to 55 °C and fed to a centrifugal separator which separated cream of 60 vol.% fat and skimmed milk of 0.05 vol.% to 0.20 vol.% fat. The skimmed milk was heated to 65 °C.

A mixture of plant sterol and stanol esters were used as the cholesterol lowering agent (referred to in the following as "STAEST") available from the Raisio Group (Raisio, Finland) under the tradename of Benecol® C700 (1-2 % sterol esters, 58-59 % stanol esters, 40 % rape seed oil fatty acids). The STAEST stored in drums, typically in 180 kg drums, were first preheated in a thermal chamber at a temperature of 65 °C and then, after meting into an oil, poured into a tank to reach a temperature of 68 °C while mechanically agitating. The STAEST in the form of a hot oil were injected into the pipe line of the skimmed milk. The dosing system was programmed to maintain a constant flow of the injected STAEST in relation to the flow rate of the skimmed milk stream. The STAEST were constantly dosed to the skimmed milk stream in an amount of 5.45 vol.%. The resulting mixture of STAEST and skimmed milk was subjected to a first stage of homogenization at 180 bar, immediately followed by a second stage of homogenization at 20 bar. The homogenized mixture was further heated in a pasteurization section to 72 °C and remained at this temperature for 15 s in a holding tube. The mixture of skimmed milk and STAEST was then cooled to 3 °C and stored in an intermediate tank under agitation. The process was continued until 20 vol.% of the total raw milk needed for the batch recipe was used.

The remaining 80 vol.% of the raw milk were in the same way preheated to 65°C and fed into a centrifugal separator, which separated the raw milk into cream with 60 vol.% fat content and partially skimmed milk with 2.38 vol.% fat content. The partially skimmed milk was further heated to 65°C, pasteurized at 72 °C for 15 s, and cooled to 3°C. Finally, the partially skimmed milk was fed into the intermediate tank containing the above-described mixture of skimmed milk and STAEST while thoroughly agitating for 10 min. The resulting soft white cheese making mixture contained the STAEST in an amount of 1.09 vol.%. After preheating the soft white cheese making mixture to 36°C, it was fed into cheese vats, each having a capacity of 1000 l and already containing 4.8 kg thermophilic dairy bulk starter culture (Danisco Bulk Set Y502 LYO500l).

Next, milk coagulation was effected by adding 130 ml rennet and 120 ml calcium chloride while agitating the cheese making mixture. After a coagulation time of 45 min, the coagulum was cut in cubes and allowed to stand for 10 min to form curd and separate liquid whey. The vats were emptied into perforated rectangular molds and the whey was let to drain off naturally through the perforations. The cheese curd remained in the molds overnight in a chamber at a controlled temperature of 18 °C while periodically turning upside down the molds for the whey draining process to continue.

On the second day, the formed cheese blocks were removed from the molds and dry sodium chloride was added to their surface. The salt-treated curd blocks were then placed into open plastic containers each one containing 12 blocks of cheese and transferred to a temperature controlled room at 20 °C, staying in the room for 24 hours in order to complete the whey draining process. Then (on the third day), the yield of the cheese was determined to be 3.96 (yield = (kg of mixture milk + STAEST) / (kg of cheese)).

The cheese blocks were then placed into tin containers and the container were filed with brine of 6 Be and sealed. The container was placed into a temperature controlled room at 18 °C to allow cheese ripening to occur. After 11 days the pH decreased below 4.6 and the characteristic organoleptic properties (structure, taste, aroma) were attained. The composition of the final brine-matured soft white cheese was as follows:

Plant stanols: 2.68 wt.%
Total fat (milk fat + free fatty acids from STAEST): 11.90 wt.%
Water: 63.76 wt.%
Protein: 20.08 wt.%
Salt: 1.58 wt.%

This means that the final brine-matured soft white cheese contains 2.01 g of stanols/sterols per 75 g of cheese (i.e. the recommended daily dose) and has less than 12 % of total fats. Thus, the feta-type, low-fat, soft white cheese prepared according to Example 1 complies with the criteria stipulated in the relevant EU legislation required for a health claim referring to the reduction of blood cholesterol level.

EXAMPLE 2

Preparation of a feta-type, low-fat, soft white cheese

Sheep raw milk and goat raw milk were mixed in the following ratio and the resulting mixture contained the following protein, fat and water contents:

Sheep raw milk: 4200 kg (84 vol.%)
Goat raw milk: 800 kg (16 vol.%)
Total protein: 5.19 wt.%
Total fat: 5.96 wt.%
Free added water content: 6.2 wt.%

The preparation of the soft white cheese making mixture was carried out as described in Example 1, except that the STAEST were injected into the skimmed milk stream in an amount of 6.10 vol.% instead of 5.45 vol.%. Further, the centrifugal separator separated the raw milk mixture into cream with 60 vol.% fat content and partially skimmed milk with 2.32 vol.% fat content instead of cream with 60 vol.% fat content and partially skimmed milk with 2.38 vol.% fat content. Further, the soft white cheese making mixture contained the STAEST in an amount of 1.22 vol.%.

The curd preparation process was also carried out as described in Example 1, except that 4.5 kg instead of 4.8 g of thermophilic dairy starter culture were used. The yield of the cheese was determined to be 4.32.

The composition of the final brine-matured, soft white cheese was as follows:

Plant stanols: 2.72 wt.%
Total fat (milk fat + free fatty acids from-STAEST): 10.90 wt.%
Water: 64.06 wt.%
Protein: 20.64 wt.%
Salt: 1.68 wt.%

This means that the final brine-matured, soft white cheese contains 2.04 g of stanols/sterols per 75 g of cheese (i.e. the recommended daily dose) and has less than 12 % of total fats. Thus, the feta-type, low-fat, soft white cheese prepared according to Example 1 complies with the criteria stipulated in the relevant EU legislation required for a health claim referring to the reduction of blood cholesterol level.

EXAMPLE 3

Preparation of a feta-type, low-fat, soft white cheese

Sheep raw milk and goat raw milk were mixed in the following ratio and the resulting mixture contained the following protein, fat and water contents:

Sheep raw milk: 1170 kg (39 vol.%)
Goat raw milk: 1830 kg (61 vol.%)
Total protein: 4.55 wt.%
Total fat: 5.05 wt.%
Free added water content: 6.4 wt.%

The preparation of the soft white cheese making mixture was carried out as described in Example 1, except that the STAEST were injected into the skimmed milk stream in an amount of 4.63 vol.% instead of 5.45 vol.%. Further, the centrifugal separator separated the raw milk mixture into cream with 60 vol.% fat content and partially skimmed milk with 2.08 vol.% fat content instead of cream with 60 vol.% fat content and partially skimmed milk with 2.38 vol.% fat content. The soft white cheese making mixture contained the STAEST in an amount of 0.93 vol.%.

The curd preparation process was also carried out as described in Example 1, except that the soft white cheese making mixture was preheated to 34 °C instead of 36 °C prior to addition into the cheese vats. In addition, 4.0 kg instead of 4.8 kg of thermophilic dairy starter culture, 140 ml rennet instead of 130 ml, 130 ml calcium chloride instead of 120 ml, and a coagulation time of 50 min instead of 45 min were used. The yield of the cheese was determined to be 4.82.

The composition of the final brine-matured, soft white cheese was as follows:

Plant stanols: 2.58 wt.%
Total fat (milk fat + free fatty acids from STAEST): 11.56 wt.%
Water: 63.35 wt.%
Protein: 20.75 wt.%
Salt: 1.76 wt.%

This means that the final brine-matured, soft white cheese contains 1.93 g of stanols/sterols per 75 g of cheese (i.e. the recommended daily dose) and has less than 12 % of total fats. Thus, the feta-type, low-fat, soft white cheese prepared according to Example 1 complies with the criteria stipulated in the relevant EU legislation required for a health claim referring to the reduction of blood cholesterol level.

EXAMPLE 4

Sensory analysis of cheese samples

A sensory analysis of different cheese samples was carried out in order to investigate if they present discrete differences in their basic and secondary sensory characteristics as well as to find their rank in respect to total liking.

1. Experimental procedures

1.1 Materials

The following samples of cheese were tested: i) one Feta sample (available under the trade name Minerva HORIO Feta PDO; a traditional feta cheese) and ii) four experimental Light White cheese samples containing a Benecol stanol/sterol mixture named in the following as Benecol-1, Benecol-2, Benecol-3, and Benecol-4 ("the Benecol samples"). Benecol-1 and Benecol-2 samples were prepared according to Example 1 and Benecol-3 and Benecol-4 samples were prepared according to Example 2.

The Feta sample and the four Benecol samples were delivered in plastic bags of 200 g for Feta cheese and of 50 g for the Benecol cheeses. They were stored at refrigeration temperature (3°C to 5°C). Before the analysis, satisfactory quantity of each sample was withdrawn from the refrigerator and used for the sample preparation.

1.2 Methods

Sensory evaluation is a scientific method for the examination of foods by means of the senses. Sensory analysis requires a panel of trained assessors and use of appropriate standard tests according to the respective objective.

The sensory analysis of the cheese samples (Feta and Benecol samples) was carried out in triplicate by a 15 to 30-member trained sensory panel (4 men and 11 women) in the Sensory Laboratory of Food Chemistry and Technology Laboratory of the National Technical University of Athens (NTUA). The NTUA sensory laboratory is accredited for sensory analyses of foods according to ISO 17025. NTUA has over 20-year education, training and research experience in the field of sensory analysis.

All participants selected were authorized panellists of the accredited sensory laboratory (according to ISO 17025) of NTUA. The panelists had trained in the sensory analysis lexicon and methodology (ISO 5492:2008 and ISO 5496:2006) and had participated in proficiency testing of the 4 basic tastes (sweet, sour, salty and bitter), and had experience in accessing various food products. Prior to the sensory analysis the assessors became familiar with the main and the secondary sensory characteristics of Feta cheese and the relative sensory characters/descriptors.

Before the sensory analysis, sufficient quantities of each cheese sample were unpacked, cut into pieces of same dimensions and served by the leader of the panel in suitable white plates codified by random 3-digit numbers. Each assessor performed tests at a separate booth with proper lighting and ventilation. Proper instructions for the sensory test were given to the assessors by the leader of the panel. The panelists were provided with room-temperature distilled water to rinse their mouth before testing and between samples.

The following sensory tests were carried out:

*A. Descriptive analysis of Feta cheese sample*

A Feta cheese sample is examined with respect to main and secondary sensory attributes and the particular attributes of the sample itself are identified.

*B. Triangle test (ISO 4120:2004) - comparison between Feta cheese sample and Benecol (Light White cheese) samples*

Samples of two products that will be compared (i.e. Feta cheese sample and Benecol samples) are served to the assessors, especially two samples of the one product and one of the other product for determining whether a perceptible sensory difference exists between the samples of two products. More simply, assessors must identify the different (odd) sample between the three ones in respect to the total rating based on main as well as on secondary sensory attributes.

*C. Test comparison of Benecol (Light White cheese) samples to Feta cheese as reference sample*

Benecol 1-4 samples are separately compared to a Feta cheese sample which is used as reference sample with respect to total rating based on main as well as on secondary sensory attributes.

*D. Degree of liking (total rating)*

The samples are rated using a 0-10 scale (10=excellent) with respect to the degree of liking. Each sample is tested separately by the assessors.

2. Results and Discussion

*2.1 Descriptive analysis*

The data from the assessors' responses for the identification of the individual sensory attributes of the Feta cheese sample are presented as percentage of the assessors responses in TABLE 1.

TABLE 1. Descriptive Analysis of Feta cheese sample (% responses of assessors)

| Sensory Attributes | | % Assessors |
|---|---|---|
| Color | Normal | 81.3 |
| | Deteriorated | 6.3 |

(continued)

| Sensory Attributes | | % Assessors |
|---|---|---|
| Appearance | Flat/Smooth | 68.8 |
| | Checks/Fissures | 62.5 |
| | Homogenous/Uniform | 43.8 |
| | Holes | 68.8 |
| | Fatty | 25.0 |
| | Brine | 56.3 |
| | Defects | 12.5 |
| Odor | Normal | 100.0 |
| | Deteriorated | - |
| | Abnormal | - |
| Texture (knife) | Hard | 6.3 |
| | Soft | 75.0 |
| | Cohesive/Firm | 31.3 |
| | Adhesive/Gummy | 25.0 |
| | Consistence | 50.0 |
| | Clots | 62.5 |
| | Fatty | 31.3 |
| Texture (mouth) | Hard | - |
| | Soft | 81.3 |
| | Cohesive/Firm | 43.8 |
| | Adhesive/Gummy | 50.0 |
| | Grainy | 25.0 |
| | Insoluble clots | 18.8 |
| | Fatty | 62.5 |
| | Aging | 18.8 |
| Taste | Salty | 75.0 |
| | Palatable | 81.3 |
| | Abnormal | 6.3 |
| | Acid | 62.5 |
| Flavor (odor/taste) | Palatable | 93.8 |
| | Deteriorated, contaminated, other | 6.3 |
| Aftertaste | | 81.3 |
| Degree of liking (excellent=10) | | 8.0 |

*2.2 Triangle test*

The results of the four triangle tests (ISO 4120:2004) in which each of the 4 Benecol samples were compared separately to the Feta cheese are presented in TABLES 2 to 5 as sum of correct responses of assessors that distinguished the different sample with respect to the total rating/degree of liking based on individual sensory attributes.

TABLE 2. Results of triangle test - comparison of Feta cheese with Benecol-1, Benecol-2, Benecol-3 and Benecol-4 Light White cheeses

| | Sum of correct responses* (No. of assessors: 30) | | | |
|---|---|---|---|---|
| Sensory Attributes | Benecol-1 | Benecol-2 | Benecol-3 | Benecol-4 |
| Color | 28 | 27 | 28 | 29 |
| Appearance | 25 | 26 | 29 | 27 |

(continued)

| Sensory Attributes | Sum of correct responses* (No. of assessors: 30) | | | |
| --- | --- | --- | --- | --- |
| | Benecol-1 | Benecol-2 | Benecol-3 | Benecol-4 |
| Consistency (holes) | 26 | 26 | 24 | 25 |
| Brine | 24 | 25 | 25 | 28 |
| Odor | 28 | 26 | 28 | 29 |
| Texture (knife) | 27 | 25 | 29 | 30 |
| Hardness | 28 | 24 | 28 | 29 |
| Texture (mouth) | 27 | 26 | 27 | 30 |
| Hardness | 28 | 26 | 26 | 29 |
| Fatty | 28 | 26 | 26 | 29 |
| Taste | 27 | 27 | 27 | 30 |
| Saltiness | 28 | 25 | 26 | 29 |
| Flavor (odor/taste) | 27 | 26 | 27 | 29 |
| Aftertaste | 26 | 26 | 25 | 28 |
| Total rating/degree of liking | 30 | 26 | 26 | 29 |
| * minimum number of correct responses in total 30 responses for existence of statistically significant differences ($\alpha$=0.01):20 | | | | |

Based on the results of the four triangle tests shown in TABLE 2, discrete differences were perceived by the assessors by comparing each of the four samples (Benecol-1, Benecol-2, Benecol-3 and Benecol-4) with Feta cheese in respect to all sensory attributes (> 20 correct responses in total 30). Statistical processing of the results demonstrated that each of the four Benecol samples are significantly different to the Feta cheese sample ($\alpha$=0.01) with respect to the total rating/degree of liking.

2.3 *Test comparison of Benecol samples to Feta cheese as reference sample*

The comparison results of each Benecol 1-4 samples with Feta cheese as reference sample are presented in TABLE 3 as sum of the responses of assessors that recognized the nearest between the Benecol samples to the Feta cheese reference sample.

TABLE 3. Results of comparison of Benecol-1, Benecol-2, Benecol-3 and Benecol-4 (Light White) cheeses with Feta cheese as reference sample

| Sensory Attributes | Sum of correct responses (No. of assessors: 24) | | | |
| --- | --- | --- | --- | --- |
| | Benecol-1 | Benecol-2 | Benecol-3 | Benecol-4 |
| Color | 4 | 18 | 2 | 2 |
| Appearance | 4 | 18 | 2 | 4 |
| Odor | 6 | 12 | 8 | 8 |
| Texture (knife) | 16 | 14 | 16 | 14 |
| Texture (mouth) | 14 | 14 | 14 | 16 |
| Taste | 8 | 10 | 6 | 8 |
| Flavor (odor/taste) | 10 | 12 | 6 | 8 |
| Aftertaste | 12 | 12 | 8 | 8 |

(continued)

| Sensory Attributes | Sum of correct responses (No. of assessors: 24) | | | |
|---|---|---|---|---|
| | Benecol-1 | Benecol-2 | Benecol-3 | Benecol-4 |
| Total rating/degree of liking | 4 | 8 | 4 | 6 |
| * minimum number of correct responses in total 24 responses for existence of statistically significant differences ($\alpha$=0.05):17 | | | | |

Based on the results of the tests comparison of each of the four Benecol 1-4 samples separately with Feta cheese as reference sample (TABLE 3), it is concluded that the four Benecol samples are similar or comparable to Feta cheese ($\alpha$=0.01) in respect to the total rating/degree of liking based on individual sensory attributes.

2.4 *Degree of liking*

The results of the total rating/degree of liking for Feta cheese and Benecol 1-4 samples are presented in TABLE 4 as mean values of the assessors' ratings using a 0-10 scale (10=excellent).

TABLE 4. Mean values of total rating/degree of liking (10=excellent) for Feta cheese and Benecol 1-4 (Light White cheese) samples

| Cheese Sample | Total rating/degree of liking (No. of assessors: 24) |
|---|---|
| Feta | 8.0 |
| Benecol-1 | 7.1 |
| Benecol-2 | 6.8 |
| Benecol-3 | 6.4 |
| Benecol-4 | 6.9 |

The total rating/degree of liking (DOL) scores values of Benecol samples show that the Benecol samples are palatable (DOL>7), similar to a traditional Feta cheese.

In summary, the above-described sensory analysis demonstrates that the low-fat, brine-matured, soft white cheese of the feta-type according to the present invention shows excellent sensory attributes similar to Greek traditional Feta cheese.

EXAMPLE 5

Instrumental analysis of cheese samples

The color and texture of the same Feta cheese sample and Benecol 1-4 (Light White cheese) samples as used in Example 4 were measured. More specifically, the color of the cheese samples was measured by a MINOLTA CR-200 colorimeter, and the color parameters L*, a* and b* of the CIELAB color scale were determined. The total Color (E) and Chroma (C) are estimated as:

$$\mathrm{E} = \sqrt{(L)^2 + (a)^2 + (b)^2} \text{ and } C = \sqrt{(a)^2 + (b)^2}$$

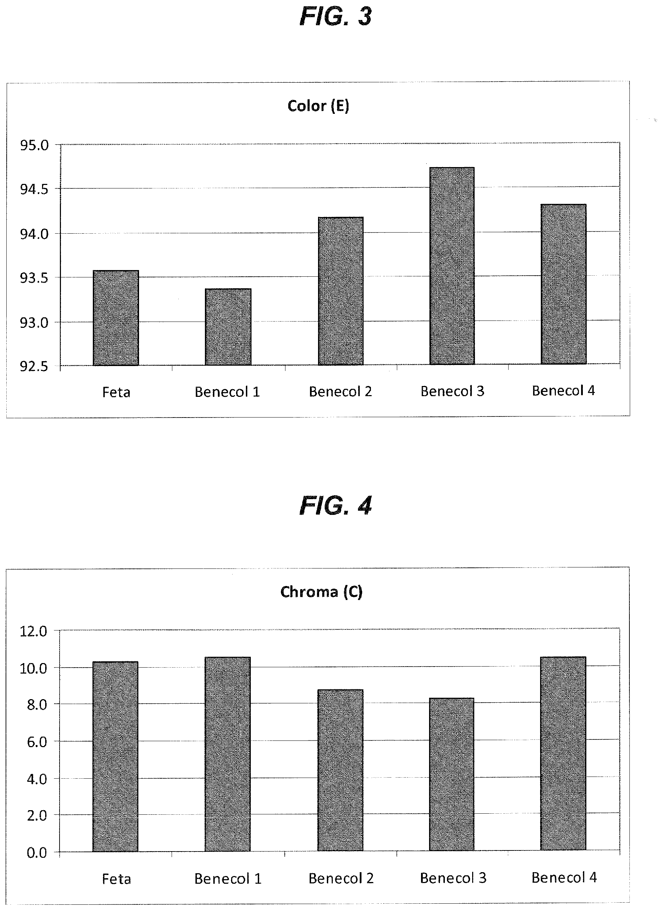

The texture of cheese samples was measured using a «TA-XT2i Texture Analyser» (Stable Micro Systems Ltd., Godalming, Surrey, UK). The hardness of cheese samples was determined by cutting with a knife (TA-45 Craft Knife) (speed 3 mm/s, depth 5 mm). The hardness was also determined by dual compression with cylinder (SMP P/20) (speed 3 mm/s, depth 5 mm). Other texture parameters such as adhesiveness, consistency and gumminess of the cheese samples were also determined. The measurements were replicated four times and the mean values are presented in FIGS. 3-9, in which

FIG. 3 is a bar chart showing Color (E) of Benecol 1-4 samples compared to Feta cheese;

FIG. 4 is a bar chart showing Chroma (C) of Benecol 1-4 samples compared to Feta cheese;

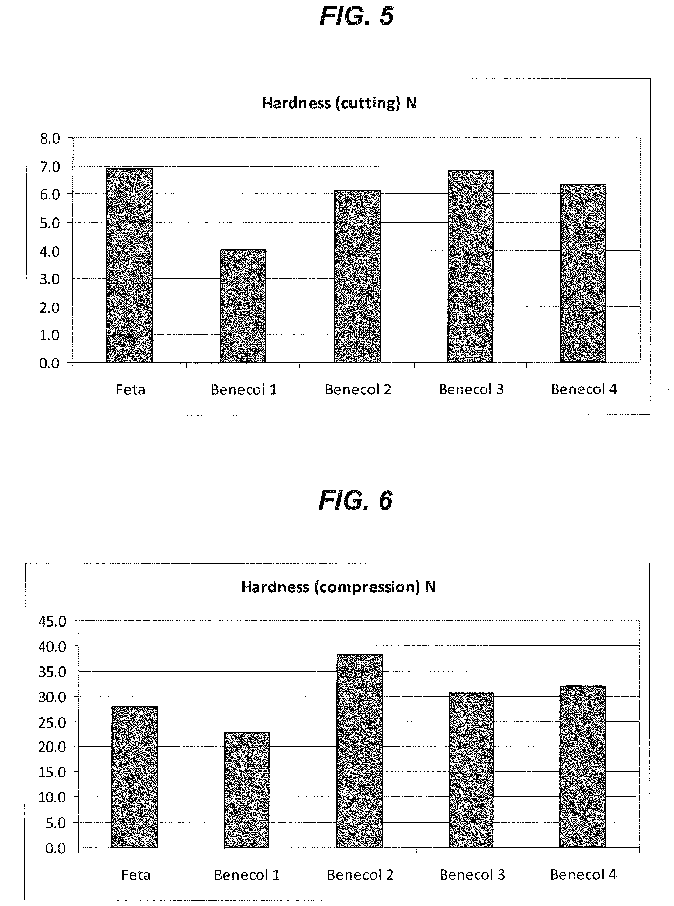

FIG. 5 is a bar chart showing Hardness (N) by cutting of Benecol 1-4 samples compared to Feta cheese;

FIG. 6 is a bar chart showing Hardness (N) by compression of Benecol 1-4 samples compared to Feta cheese;

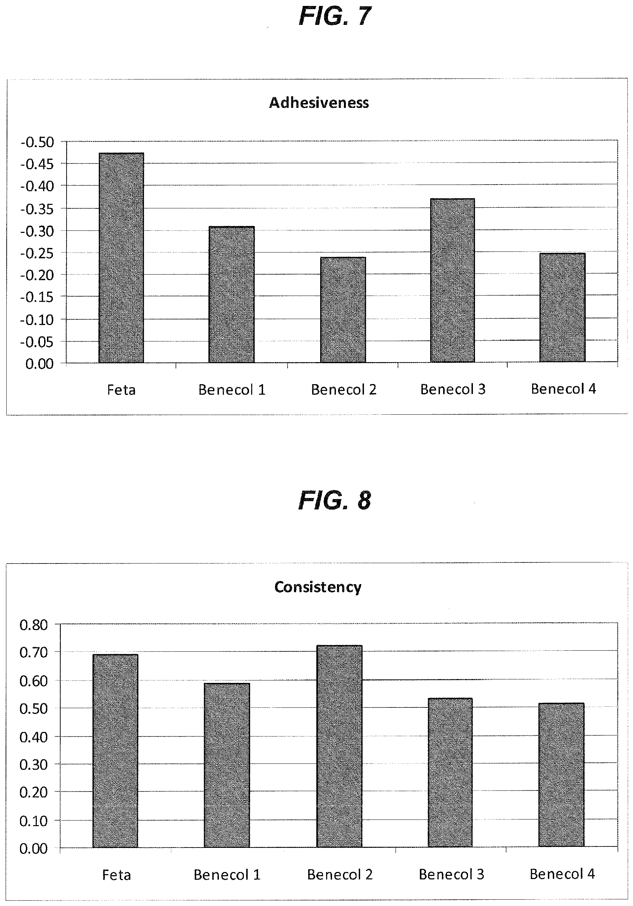

FIG. 7 is a bar chart showing adhesiveness of Benecol 1-4 samples compared to Feta cheese;

FIG. 8 is a bar chart showing consistency of Benecol 1-4 samples compared to Feta cheese; and

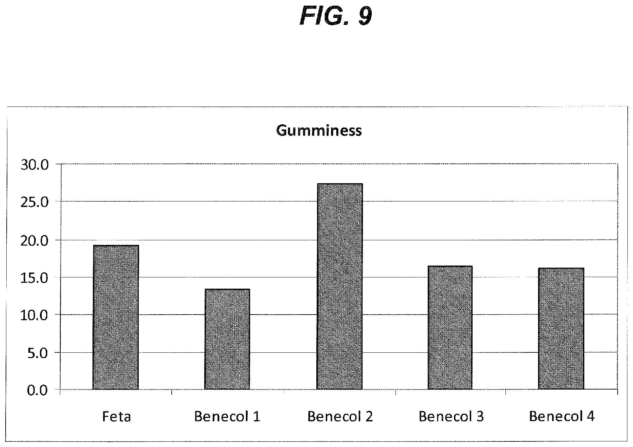

FIG. 9 is a bar chart showing gumminess of Benecol 1-4 samples compared to Feta cheese.

The data presented in FIGS. 3-9 show that both the color/chroma and the texture parameters (hardness, adhesiveness, consistency and gumminess) of the Benecol samples are similar to traditional Feta cheese.

**Claims**

1. A method for preparing a brine-matured, soft white cheese enriched with a cholesterol lowering agent, comprising the following steps in sequential order:

(a) preparing a homogeneous mixture of skimmed milk and a cholesterol lowering agent by carrying out the following sub-steps:

(i) providing skimmed milk,
(ii) providing a cholesterol lowering agent, the cholesterol lowering agent being selected from the group consisting of free plant sterols, plant sterol esters, free plant stanols, plant stanol esters, and mixtures thereof,
(iii) mixing the skimmed milk and the cholesterol lowering agent, and
(iv) homogenizing the mixture of skimmed milk and the cholesterol lowering agent to give a homogeneous mixture of skimmed milk and cholesterol lowering agent;

(b) providing partially skimmed milk, the partially skimmed milk not being subjected to homogenization;
(c) mixing the homogeneous mixture of skimmed milk and cholesterol lowering agent provided in step (a) and the partially skimmed milk of step (b) to obtain a soft white cheese making mixture; and
(d) preparing the brine-matured, soft white cheese enriched with a cholesterol lowering agent from the soft white cheese making mixture obtained in step (c).

2. The method of claim 1, wherein the brine-matured, soft white cheese is a feta-type cheese.

3. The method of claim 1 or 2, wherein the skimmed milk and the partially skimmed milk are prepared from sheep raw milk, goat raw milk or a mixture thereof.

4. The method of any one of claims 1 to 3, wherein the skimmed milk provided in step (a)(i) is prepared from 10 wt.% to 40 wt.% of the total amount of raw milk needed in the preparation of the brine-matured, soft white cheese, and wherein the partially skimmed milk provided in step (b) is prepared from the remaining 60 wt.% to 90 wt.% of the total amount of raw milk needed in the preparation of the brine-matured, soft white cheese.

5. The method of any one of claims 1 to 4, wherein the cholesterol lowering agent is used in an amount such that a recommended daily dose of 75 g of the brine-matured, soft white cheese contains the cholesterol lowering agent in an amount sufficient to have a blood cholesterol lowering effect.

6. The method of any one of claims 1 to 5, wherein the cholesterol lowering agent is used in an amount such that the brine-matured, soft white cheese contains the cholesterol lowering agent in an amount of from 2 wt.% to 4 wt.%.

7. The method of any one of claims 1 to 6, wherein the mixing step (a)(iii) is effected by dosing the cholesterol lowering agent into a stream of the skimmed milk at a ratio that results in a brine-matured, soft white cheese containing the cholesterol lowering agent in an amount of 2 wt.% to 4 wt.%.

**8.** The method of any one of claims 1 to 7, wherein the cholesterol lowering agent is heated to a temperature of from 63 °C to 73 °C to form a liquid phase prior to mixing in step (a)(iii).

**9.** The method of any one of claims 1 to 8, wherein the homogenization of step (a)(iv) includes a first homogenization stage at a pressure of 80 bar to 220 bar and a subsequent second homogenization stage at a pressure of 15 bar to 40 bar.

**10.** The method of any one of claims 1 to 9, wherein step (a) further includes sub-step (v) of pasteurizing the homogeneous mixture of skimmed milk and cholesterol lowering agent obtained in sub-step (iv) and/or wherein step (b) includes a pasteurization step.

**11.** The method of any one of claims 1 to 10, wherein step (b) of providing a partially skimmed milk includes partially separating the raw milk into cream and partially skimmed milk and pasteurizing the obtained partially skimmed milk.

**12.** The method of any one of claims 1 to 11, wherein both the homogeneous mixture of skimmed milk and cholesterol lowering agent and/or the partially skimmed milk are cooled to a temperature of from 2 °C to 6 °C at the end of step (a) and/or step (b) and prior to mixing step (c).

**13.** The method of any one of claims 1 to 12, wherein step (d) includes the sub-steps of adding a starter culture to the soft white cheese making mixture for fermentation, adding a coagulant, preferably rennet, to effect milk coagulation, preparing the curd by draining whey from the coagulum, maturating the cheese in brine, and cooling and packaging the cheese.

**14.** A brine-matured, soft white cheese, obtainable by the process according to any one of claims 1 to 13, wherein the total fat content of the brine-matured, soft white cheese is no more than 12 wt.%.

**15.** The brine-matured, soft white cheese of claim 14 for use in the prevention or treatment of diseases associated with hypercholesterolemia.

**Patentansprüche**

**1.** Verfahren zur Herstellung eines mit einem Cholesterinsenkungsmittel angereicherten, in Salzlake gereiften Weichweißkäses, umfassend die folgenden Schritte in nachfolgender Reihenfolge:

(a) Herstellen einer homogenen Mischung aus Magermilch und einem Cholesterinsenkungsmittel durch Durchführen der folgenden Teilschritte:

(i) Bereitstellen von Magermilch,
(ii) Bereitstellen eines Cholesterinsenkungsmittels, wobei das Cholesterinsenkungsmittel ausgewählt ist aus der Gruppe bestehend aus freien Pflanzensterinen, Pflanzensterinestern, freien Pflanzenstanolen, Pflanzenstanolestern und Mischungen davon,
(iii) Mischen der Magermilch und des Cholesterinsenkungsmittels, und
(iv) Homogenisieren der Mischung aus Magermilch und dem Cholesterinsenkungsmittel, um eine homogene Mischung aus Magermilch und dem Cholesterinsenkungsmittel zu erhalten;

(b) Bereitstellen von teilweise entrahmter Milch, wobei die teilweise entrahmte Milch keiner Homogenisierung unterzogen wird;
(c) Mischen der in Schritt (a) bereitgestellten homogenen Mischung aus Magermilch und dem Cholesterinsenkungsmittel mit der teilweise entrahmten Milch aus Schritt (b), um eine Weichweißkäseherstellungsmischung zu erhalten; und
(d) Herstellen des mit einem Cholesterinsenkungsmittel angereicherten, in Salzlake gereiften Weichweißkäses aus der in Schritt (c) erhaltenen Weichweißkäseherstellungsmischung.

**2.** Verfahren nach Anspruch 1, wobei der in Salzlake gereifte Weichweißkäse ein Fetaartiger Käse ist.

**3.** Verfahren nach Anspruch 1 oder 2, wobei die Magermilch und die teilweise entrahmte Milch aus Schafrohmilch, Ziegenrohmilch oder einer Mischung davon hergestellt werden.

**4.** Verfahren nach einem der Ansprüche 1 bis 3, wobei die in Schritt (a)(i) bereitgestellte Magermilch aus 10 Gew.-% bis 40 Gew.-% der Gesamtmenge an Rohmilch, die bei der Herstellung des in Salzlake gereiften Weichweißkäses benötigt wird, hergestellt wird, und wobei die in Schritt (b) bereitgestellte teilweise entrahmte Milch aus den verbleibenden 60 Gew.-% bis 90 Gew.-% der Gesamtmenge an Rohmilch, die bei der Herstellung des in Salzlake gereiften Weichweißkäses benötigt wird, hergestellt wird.

**5.** Verfahren nach einem der Ansprüche 1 bis 4, wobei das Cholesterinsenkungsmittel in einer solchen Menge verwendet wird, dass eine empfohlene Tagesdosis von 75 g des in Salzlake gereiften Weichweißkäses das Cholesterinsenkungsmittel in einer Menge enthält, die ausreichend ist, um eine cholesterinsenkende Wirkung zu bewirken.

**6.** Verfahren nach einem der Ansprüche 1 bis 5, wobei das Cholesterinsenkungsmittel in einer solchen Menge verwendet wird, dass der in Salzlake gereifte Weichweißkäse das Cholesterinsenkungsmittel in einer Menge von 2 Gew.-% bis 4 Gew.-% enthält.

**7.** Verfahren nach einem der Ansprüche 1 bis 6, wobei der Mischschritt (a)(iii) durch Dosieren des Cholesterinsenkungsmittels zu einem Strom der Magermilch in einem Verhältnis erfolgt, das zu einem in Salzlake gereiften Weichweißkäse führt, der das Cholesterinsenkungsmittel in einer Menge von 2 Gew.-% bis 4 Gew.-% enthält.

**8.** Verfahren nach einem der Ansprüche 1 bis 7, wobei das Cholesterinsenkungsmittel auf eine Temperatur von 63°C bis 73 °C erwärmt wird, um vor dem Mischen in Schritt (a)(iii) eine flüssige Phase zu erzeugen.

**9.** Verfahren nach einem der Ansprüche 1 bis 8, wobei das Homogenisieren in Schritt (a)(iv) einen ersten Homogenisierungsschritt bei einem Druck von 80 bar bis 220 bar und einen nachfolgenden zweiten Homogenisierungsschritt bei einem Druck von 15 bar bis 40 bar umfasst.

**10.** Verfahren nach einem der Ansprüche 1 bis 9, wobei der Schritt (a) ferner den Teilschritt (v) des Pasteurisierens der in Teilschritt (iv) erhaltenen homogenen Mischung aus Magermilch und Cholesterinsenkungsmittel umfasst, und/oder wobei Schritt (b) einen Pasteurisierungsschritt umfasst.

**11.** Verfahren nach einem der Ansprüche 1 bis 10, wobei der Schritt (b) des Bereitstellens der teilweise entrahmten Milch das teilweise Abtrennen der Rohmilch in Sahne und teilweise entrahmter Milch und das Pasteurisieren der erhaltenen teilweise entrahmten Milch umfasst.

**12.** Verfahren nach einem der Ansprüche 1 bis 11, wobei die homogene Mischung aus Magermilch und Cholesterinsenkungsmittel und/oder die teilweise entrahmte Milch am Ende von Schritt (a) und/oder Schritt (b) und vor dem Mischschritt (c) auf eine Temperatur von 2 °C bis 6 °C abgekühlt werden.

**13.** Verfahren nach einem der Ansprüche 1 bis 12, wobei Schritt (d) die Teilschritte des Zugebens einer Starterkultur zu der Weichweißkäseherstellungsmischung für die Fermentation, des Zugebens eines Koagulationsmittels, vorzugsweise Lab, um eine Milchgerinnung zu bewirken, des Herstellens von Quark durch Ablassen von Molke aus der geronnenen Masse, des Reifens des Käses in Salzlake, und des Abkühlens und Verpackens des Käses umfasst.

**14.** In Salzlake gereifter Weichweißkäse, erhältlich durch das Verfahren nach einem der Ansprüche 1 bis 13, wobei der Gesamtfettgehalt des in Salzlake gereiften Weichweißkäses mehr als 12 Gew.-% beträgt.

**15.** In Salzlake gereifter Weichweißkäse nach Anspruch 14 zur Verwendung bei der Prävention oder Behandlung von mit Hypercholesterinämie verbundenen Erkrankungen.

**Revendications**

**1.** Procédé de préparation d'un fromage blanc à pâte molle, mûri dans la saumure, enrichi en hypocholestérolémiant, comprenant les étapes suivantes dans l'ordre séquentiel :

    (a) préparer un mélange homogène de lait écrémé et d'un hypocholestérolémiant par réalisation des sous-étapes suivantes :

        (i) fournir du lait écrémé,

(ii) fournir un hypocholestérolémiant, l'hypocholestérolémiant étant choisi dans le groupe constitué par les phytostérols libres, les esters de phytostérol, les phytostanols libres, les esters de phytostanol et leurs mélanges,

(iii) mélanger le lait écrémé et l'hypocholestérolémiant, et

(iv) homogénéiser le mélange de lait écrémé et de l'hypocholestérolémiant pour donner un mélange homogène de lait écrémé et d'hypocholestérolémiant ;

(b) fournir du lait partiellement écrémé, le lait partiellement écrémé n'étant pas soumis à une homogénéisation ;

(c) mélanger le mélange homogène de lait écrémé et de l'hypocholestérolémiant fourni à l'étape (a) et le lait partiellement écrémé de l'étape (b) pour obtenir un mélange de préparation de fromage blanc à pâte molle ; et

(d) préparer le fromage blanc à pâte molle, mûri dans la saumure, enrichi en hypocholestérolémiant à partir du mélange de préparation de fromage blanc à pâte molle obtenu à l'étape (c).

2. Procédé selon la revendication 1, dans lequel le fromage blanc à pâte molle, mûri dans la saumure est un fromage de type feta.

3. Procédé selon la revendication 1 ou 2, dans lequel le lait écrémé et le lait partiellement écrémé sont préparés à partir de lait cru de brebis, de lait cru de chèvre ou de l'un de leurs mélanges.

4. Procédé selon l'une quelconque des revendications 1 à 3, dans lequel le lait écrémé fourni à l'étape (a) (i) est préparé à partir de 10 % en poids à 40% en poids par rapport à la quantité totale de lait cru nécessaire dans la préparation du fromage blanc à pâte molle, mûri dans la saumure, et dans lequel le lait partiellement écrémé fourni à l'étape (b) est préparé à partir de 60% en poids à 90 % en poids restant par rapport à la quantité totale de lait cru nécessaire dans la préparation du fromage blanc à pâte molle, mûri dans la saumure.

5. Procédé selon l'une quelconque des revendications 1 à 4, dans lequel l'hypocholestérolémiant est utilisé dans une quantité telle qu'une dose quotidienne recommandée de 75 g du fromage blanc à pâte molle, mûri dans la saumure contient l'hypocholestérolémiant dans une quantité suffisante pour avoir un effet de réduction du cholestérol dans le sang.

6. Procédé selon l'une quelconque des revendications 1 à 5, dans lequel l'hypocholestérolémiant est utilisé dans une quantité telle que le fromage blanc à pâte molle, mûri dans la saumure contient l'hypocholestérolémiant dans une quantité de 2 % en poids à 4 % en poids.

7. Procédé selon l'une quelconque des revendications 1 à 6, dans lequel l'étape de mélange (a)(iii) est effectuée en dosant l'hypocholestérolémiant dans un flux du lait écrémé à un rapport qui aboutit à un fromage blanc à pâte molle, mûri dans la saumure contenant l'hypocholestérolémiant dans une quantité de 2 % en poids à 4 % en poids.

8. Procédé selon l'une quelconque des revendications 1 à 7, dans lequel l'hypocholestérolémiant est chauffé à une température de 63°C à 73°C pour former une phase liquide avant mélange à l'étape (a)(iii).

9. Procédé selon l'une quelconque des revendications 1 à 8, dans lequel l'homogénéisation de l'étape (a)(iv) inclut une première étape d'homogénéisation à une pression de 80 bars à 220 bars et une seconde étape d'homogénéisation ultérieure à une pression de 15 bars à 40 bars.

10. Procédé selon l'une quelconque des revendications 1 à 9, dans lequel l'étape (a) inclut en outre la sous-étape (v) de pasteurisation du mélange homogène de lait écrémé et d'hypocholestérolémiant obtenu à la sous-étape (iv) et dans lequel l'étape (b) inclut une étape de pasteurisation.

11. Procédé selon l'une quelconque des revendications 1 à 10, dans lequel l'étape (b) de fourniture d'un lait partiellement écrémé inclut la séparation partielle du lait cru en crème et en lait partiellement écrémé et la pasteurisation du lait partiellement écrémé obtenu.

12. Procédé selon l'une quelconque des revendications 1 à 11, dans lequel le mélange homogène de lait écrémé et d'hypocholestérolémiant et/ou le lait partiellement écrémé sont tous deux refroidis à une température de 2°C à 6°C à la fin de l'étape (a) et/ou de l'étape (b) et avant l'étape (c) de mélange.

13. Procédé selon l'une quelconque des revendications 1 à 12, dans lequel l'étape (d) inclut les sous-étapes d'addition d'un ferment au mélange de préparation de fromage blanc à pâte molle pour fermentation, d'addition d'un coagulant, de préférence de présure, pour effectuer une coagulation du lait, de préparation du caillé par drainage du lactosérum issu du coagulum, de maturation du fromage dans de la saumure, et de refroidissement et d'emballage du fromage.

14. Fromage blanc à pâte molle, mûri dans la saumure, pouvant être obtenu par le processus selon l'une quelconque des revendications 1 à 13, dans lequel la teneur en matière grasse totale du fromage blanc à pâte molle, mûri dans la saumure n'est pas de plus de 12 % en poids.

15. Fromage blanc à pâte molle mûri dans la saumure selon la revendication 14, pour utilisation dans la prévention ou le traitement de maladies associées à une hypercholestérolémie.

# FIG. 1

Flowchart:

```
15-25 % raw milk                    Stanol ester drums
stored at 3 °C                      preheating at
      |                             65 °C
      v                                   |
Preheating by PHE                         v
at 55 °C                            Buffer tank storage
      |                             at 68 °C
      v                                   |
Cream <--- Cream separation               v
      |                             Dosing pump and
      v                             flow control unit
Preheating by PHE                         |
before pasteuri-  - - - - - >             v
zation at 65 °C                     Static mixture for
      |                             milk/STAEST
      v                                   |
Pasteurization by <- - - - -              v
PHE at 72 °C                        Homogenizer
      |
      v
Holding for 15 s
      |
      v
Cooling by PHE at
3 °C
      |
      v
Intermediate
buffer storage
```

# FIG. 2

```
┌─────────────────────┐
│ 85-75% raw milk     │
│ stored at 3 °C      │
└─────────────────────┘
           │
           ▼
┌─────────────────────┐
│ Preheating by       │
│ PHE at 55 °C        │
└─────────────────────┘
           │
           ▼
┌──────────────┐      ┌─────────────────────┐
│ Cream        │◄─────│ Cream               │
│              │      │ separation          │
└──────────────┘      └─────────────────────┘
                                 │
                                 ▼
                      ┌─────────────────────┐
                      │ Preheating by       │
                      │ PHE at 65 °C        │
                      └─────────────────────┘
                                 ┊
                                 ▼
                      ┌─────────────────────┐
                      │ Pasteurization by   │
                      │ PHE at 72 °C        │
                      └─────────────────────┘
                                 │
                                 ▼
                      ┌─────────────────────┐
                      │ Holding for 15 s    │
                      └─────────────────────┘
                                 │
                                 ▼
                      ┌─────────────────────┐
                      │ Cooling by PHE      │
                      │ at 3 °C             │
                      └─────────────────────┘
                                 │
                                 ▼
                      ┌─────────────────────┐
                      │ Intermediate        │
                      │ buffer storage      │
                      └─────────────────────┘
```

## FIG. 3

**Color (E)**

## FIG. 4

**Chroma (C)**

## FIG. 5

## FIG. 6

## FIG. 7

## FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5502045 A
- US 6174560 B
- WO 2010023364 A1
- US 20060177484 A1
- WO 2004056188 A1
- WO 0033669 A1